# EUROPÄISCHE PATENTANMELDUNG

(11) **EP 0 709 352 A1**
(43) Veröffentlichungstag der Anmeldung: **01.05.1996**
(21) Anmeldenummer: 95116831.9
(22) Anmeldetag: 26.10.1995
(51) Int. Cl.: C04B 35/575, C04B 35/565, F16C 33/04

(54) **Praktisch porenfreie Sinterkörper auf Basis von Siliciumcarbid enthaltend grobkörnigen Graphit**

(30) Priorität: 27.10.1994 DE 4438464
(71) Anmelder: Elektroschmelzwerk Kempten GmbH, D-81737 München (DE)
(72) Erfinder: Mössner, Brigitte, Dr., D-87439 Kempten (DE); Knoch, Heinrich, Dr., D-87448 Waltenhofen (DE)
(74) Vertreter: Potten, Holger

(57) **Zusammenfassung**

Die Erfindung betrifft praktisch porenfreie Sinterkörper auf Basis von Siliciumcarbid enthaltend grobkörnigen Graphit, Verfahren zu ihrer Herstellung und Ihre Verwendung als Gleitmaterial.

Der praktisch porenfreie Formkörper hat eine Dichte von mindestens 95 % TD, er enthält 70 bis 93 Vol.% SiC und 7 bis 30 Vol.% Festschmierstoff ausgewählt aus der Gruppe Graphit, hexagonales Bornitrid, und Ruß. Der Festschmierstoff hat eine Korngröße von 20 bis 500 µm und einen Anteil einer Korngröße größer 100 µm von mindestens 5 Vol.% bezogen auf das Gesamtvolumen des Formkörpers.

## Beschreibung

Die Erfindung betrifft praktisch porenfreie Sinterkörper auf Basis von Siliciumcarbid enthaltend grobkörnigen Graphit, Verfahren zu ihrer Herstellung und ihre Verwendung als Gleitmaterial.

Aus EP-B-0145496 sind Gleitmaterialien auf Basis von SiC bekannt, welche sich durch ein besonders feines Gefüge auszeichnen. Gemäß dieser Patentschrift darf die Korngröße des Graphits und des SiC nicht größer als 8 µm sein. Das beschriebene SiC/Graphit/Kohlenstoff-Material besitzt aufgrund seines feinen Gefüges eine erhöhte Festigkeit, und gute Thermoschockbeständigkeit. Beim Einsatz solcher Werkstoffe in einer hart/hart Paarung tritt jedoch bereits bei niedrigen pv-Werten (Druck · Geschwindigkeit) nach kurzer Zeit starker Verschleiß sowie Kantenabplatzer auf. Diese Werkstoffe sind daher ungeeignet für den Einsatz bei höherer Beanspruchung.

Neben den feinkörnigen SiC Werkstoffen enthaltend Graphit sind aus DE-C-3329225 Gleitmaterialien auf Basis von SiC bekannt, welche neben herstellungsbedingten Verunreinigungen 1 bis 20 Vol.% BN, Graphit, und/oder Ruß mit einer mittleren Korngröße von nicht mehr als 200 µm als Festschmierstoff enthalten. Vorzugsweise sollten BN, Graphit und/oder Ruß in Mengen von 1 bis 10 Vol.% oder in einer Korngröße von höchstens 50 µm vorliegen. Mittlere Korngrößen von mehr als 200 µm dürfen die Festschmierstoffe nicht besitzen, da andernfalls Sinterkörper mit nicht ausreichender Dichte und Festigkeit entstehen, die für eine Anwendung als Gleitmaterial völlig ungeeignet sind. Bevorzugt enthalten die SiC Werkstoffe gemäß DE-C-3329225 5 bis 10 Vol.-% Graphit, wobei die erfindungsgemäße Wirkung bereits bei Zugabe von 1 Vol.-% Graphit auftritt. Die Gleitmaterialien wurden bei pv-Werten von 17,6 bar m/s getestet. Für Einsatzzwecke mit einer Druckdifferenz von 50 bar oder mehr bzw. mit pv-Werten von 500 bar m/s oder mehr sind diese Materialien nicht geeignet.

Für hohe pv-Werte, beispielsweise pv-Werte größer 500 bar m/s sind bislang keine zuverlässig einsetzbaren korrosionsfesten Werkstoffe bekannt.

Aufgabe der vorliegenden Erfindung war es, ein Material auf Basis von gesintertem SiC zur Verfügung zu stellen, welches eine gute Korrosionsbeständigkeit, gute Gleiteigenschaften und gute mechanische Festigkeit, insbesondere bei Einsatzfällen, bei denen hohe Druckdifferenzen oder hohe pv-Werte auftreten, aufweist.

Die Aufgabe wird gelöst durch einen praktisch porenfreien Formkörper mit einer Dichte von mindestens 95 % seiner theoretischen Dichte (TD) enthaltend 70 bis 93 Vol.% SiC und 7 bis 30 Vol.% Festschmierstoff wobei der Festschmierstoff mindestens eine Substanz ausgewählt aus der Gruppe Graphit, hexagonales Bornitrid, und Ruß ist und eine Korngröße von 20 bis 500 µm hat, dadurch gekennzeichnet, daß der Anteil an Festschmierstoff einer Korngröße größer 100 µm mindestens 5 Vol.% bezogen auf das Gesamtvolumen des Formkörpers beträgt.

Gegebenenfalls können die erfindungsgemäßen Sinterkörper geringe Mengen metallischer oder nichtmetallischer Verunreinigungen von insgesamt < 5 Gew.-% enthalten, die von der Herstellung her oder als Mahlabrieb in den als Ausgangsmaterial verwendeten Pulvermischungen vorhanden sind.

Vorzugsweise ist die Dichte des erfindungsgemäßen Formkörpers größer als 98 %.

Vorzugsweise enthält der erfindungsgemäße Formkörper 10 bis 20 Vol.% des Festschmierstoffes.

Vorzugsweise hat der Festschmierstoff eine Korngröße von 50 bis 500 µm und einen Anteil von mindestens 5 Vol.-% vorzugsweise 5 bis 15 Vol.-% bezogen auf das Gesamtvolumen des Formkörpers einer Korngröße von 100 bis 500 µm vorzugsweise 100 bis 300 µm.

Vorzugsweise enthält der erfindungsgemäße Formkörper als Festschmierstoff Graphit.

Vorzugsweise weist der Sinterkörper neben SiC, Festschmierstoff, und den genannten ggf. vorhandenen Verunreinigungen keine weiteren Bestandteile auf.

Die erfindungsgemäßen Formkörper weisen bei Anwendungen als Gleitmaterial große Vorteile auf. Bei hohen pv-Werten beispielsweise pv-Werten größer 500 bar m/s, konnten bisher SiC Werkstoffe wegen des erhöhten Verschleißes und des Auftretens von Kantenabplatzern nicht eingesetzt werden. Erfindungsgemäße SiC Werkstoffe hingegen können auch bei pv-Werten von 1000 bar m/s oder mehr und korrosiv starker Beanspruchung über einen längeren Zeitraum verschleißfrei und zuverlässig eingesetzt werden. Sie zeigen eine erheblich höhere Standfestigeit und bessere Gleiteigenschaften unter Einsatzbedingungen mit hohen Druckdifferenzen oder pv-Werten größer als 500 bar m/s als herkömmliche SiC-Werkstoffe.

Die Herstellung der erfindungsgemäßen Formkörper erfolgt durch Mischen geeigneter SiC-Pulver mit geeigneten Festschmierstoffen sowie ggf. von für SiC Sinterkörper üblichen an sich bekannten Sinterhilfsmitteln und Preßhilfsmitteln in an sich bekannter Weise sowie anschließendes Heißpressen, Heißisostatpressen oder Drucklossintern. Solche Verfahren sind beispielsweise aus US-A-4612146 oder US-A-4234097 bekannt.

Für die Herstellung der erfindungsgemäßen Sinterkörper werden als Ausgangsmaterial vorteilhaft feine Pulver aus α-SiC, β-SiC oder Gemischen aus α- und β-SiC, besonders bevorzugt aus α-SiC mit einer mittleren Teilchengröße von 0,1 bis 5 µm und einer spezifischen Oberfläche gemessen nach BET von größer 3 m²/g, und einem Gehalt von mindestens 95 Gew.-% SiC eingesetzt.

Für die Herstellung der erfindungsgemäßen Sinterkörper werden als Festschmierstoff Graphit und/oder hexagonales Bornitrid, und/oder Ruß eingesetzt.

Der Festschmierstoff wird in Korngrößen von 20 bis 500 µm, vorzugsweise 50 bis 500 µm, besonders bevorzugt 50 bis 300 µm eingesetzt, wobei es erfindungswesentlich ist, darauf zu achten, daß mindestens 5 Vol.% bezogen auf den Sinterkörper des Festschmierstoffs eine Korngröße größer 100 µm besitzt.

Vorzugsweise sollten mindestens 5 Vol.% des Festschmierstoffes bezogen auf den Sinterkörper eine Korngröße zwischen 100 und 300 µm haben. Solche Pulver sind käuflich erhältlich oder lassen sich durch Aufmahlen in bekannter Weise und/oder Mischen aus käuflichen Pulvern herstellen.

Der Festschmierstoff wird in Mengen von 7 bis 30 Vol.-%, vorzugsweise 10 bis 20 Vol.-% bezogen auf das Gesamtvol. des Sinterkörpers eingesetzt.

Vorzugsweise wird als Festschmierstoff Graphit eingesetzt.

Beispielsweise kann die Herstellung der erfindungsgemäßen Formkörper dadurch erfolgen, daß das o.g. SiC-Pulver mit bis zu 5 Gew.-% bezogen auf das SiC eines üblichen Sinterhilfsmittels, bis 4 Gew.% bezogen auf das SiC an üblichen Presshilfsmitteln sowie 7 bis 30 Vol.-% bezogen auf den Sinterkörper eines o.g. Festschmierstoffes mittels der üblichen, bekannten Verfahren gemischt und die erhaltene Mischung mit üblichen, bekannten Formgebungsverfahren zu Grünkörpern verpreßt und anschließend heißgepreßt oder heißisostatgepreßt wird.

Als Sinterhilfsmittel sind vorzugsweise Aluminium und/oder Bor in elementarer oder gebundener Form wie beispielsweise AlN, Al₂O₃, BP, Al₃C₄ oder B₄C in Mengen von vorzugsweise 0,1 bis 2 Gew.-% sowie Kohlenstoff in elementarer Form (d.h. mit einer Teilchengröße kleiner 10 µm) oder in gebundener Form wie beispielsweise als Phenolformaldehydharz oder Polyvinylalkohol (PVA) geeignet.

Als Preßhilfsmittel sind vorzugsweise Fettsäureester oder Polyethylenderivate (z.B. Zusoplast 9002) geeignet.

Das Mischen von SiC, Festschmierstoff und Sinterhilfsmittel erfolgt beispielsweise mittels Rühren, Intensivrühren, Mischmahlen oder Trockenmischen.

Die erhaltene Mischung wird mittels bekannter Formgebungsverfahren wie beispielsweise Gesenkpressen, isostatisches Pressen, Spritzgießen, Strangpressen oder Schlickergießen in die jeweils erwünschte Form gebracht und zu Grünkörpern verpreßt. Das Verpressen kann beispielsweise in einer Graphitform erfolgen. Beim Gesenkpressen in Matrizen, bzw. beim isostatischen Pressen wird üblicherweise ein Druck von 100 bis 200 MPa, angewendet.

Die Grünkörper werden anschließend in der für SiC Sinterkörper üblichen, bekannten Weise verdichtet. Dies kann beispielsweise durch Drucklossintern, axiales oder isostatisches Heißpressen erfolgen.

Das Heißpressen erfolgt unter Ausschluß von Sauerstoff, vorzugsweise unter Schutzgas vorzugsweise bei Temperaturen im Bereich von etwa 1800 bis 2250°C und einem Druck von 10 bis 30 MPa für einen Zeitraum von 10 bis 180 min.

Für das Heißisostatpressen wird der Grünkörper in eine vakuumdicht geschlossene Hülle, vorzugsweise in Glas, gehüllt und durch Anwendung von Druck mittels eines gasförmigen Druckübertragungsmediums, wie etwa Argon, bei Temperaturen zwischen 1700 und 2100°C unter einem Druck von 10 bis 200 MPa für die Dauer von 5 bis 60 min. in einem Hochdruckautoklaven verdichtet. Durch das Heißisostatpressen wird ein Werkstoff mit einer Dichte > 98% seiner theoretischen Dichte erhalten.

Die erfindungsgemäßen Gleitmaterialien lassen sich auf verschiedenen Gebieten verwenden. Insbesondere sinnvoll ist ihre Anwendung auf Gebieten, die durch das Auftreten von hohen Druckdifferenzen (>50 bar) und/oder hohen Gleitgeschwindigkeiten (pv-Werte größer 500 bar m/s) in Verbindung mit extrem abrasiven und/oder korrosiven Medien gekennzeichnet sind. Beispiele für solche Anwendungen sind Offshoreanwendungen oder Anwendungen im Triebwerks- und Kraftwerksbereich.

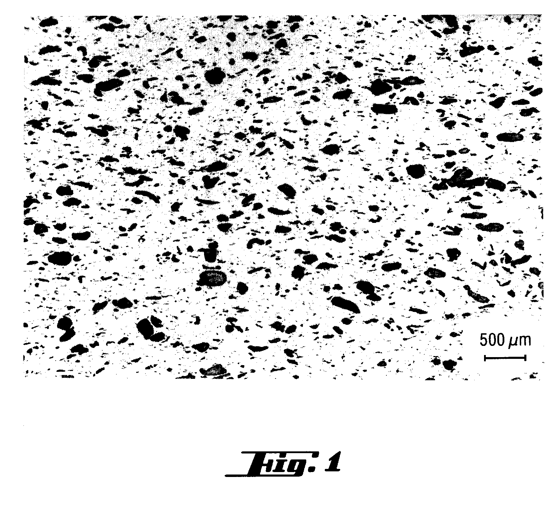

Fig. 1 zeigt das Gefügebild des erfindungsgemäßen Werkstoffes aus Beispiel 4.

Die folgenden Beispiele dienen der weiteren Erläuterung der Erfindung.

### Beispiel 1

α-SiC-Pulver mit einer mittleren Teilchengröße von 0,6 µm wurde mit 1 Gew.-% (bezogen auf das SiC) Aluminium und 1 Gew.-% (bezogen auf das SiC) amorphem Kohlenstoff (Ruß erhältlich unter der Bezeichnung FW101 bei Degussa, Hanau), 2 Gew.-% (bezogen auf das SiC) PVA, 2 Gew.% (bezogen auf das SiC) Stearinsäure sowie 7 Vol-% (bezogen auf das Gesamtvolumen des gesinterten α-SiC-Körpers) Graphitpulver einer Teilchengröße von 75 bis 300 µm mit einem Anteil von 5 Vol.% einer Teilchengröße größer 100 µm durch 30 minütiges Intensivrühren in Wasser vermischt.

Die erhaltene Mischung wurde nach dem Trocknen und Zerkleinern kaltisostatisch bei einem Druck von 200 MPa zu Formlingen verpreßt. Die Formlinge wurden in Glas gehüllt und bei einer Temperatur von 2000°C und einem spezifischen Druck von 200 MPa über einen Zeitraum von 60 min heißisostatisch verdichtet.

### Beispiel 2

Analog Beispiel 1 wurde ein Sinterkörper hergestellt mit dem Unterschied, daß statt 1 % Aluminium 1% Bor zugesetzt wurde.

### Beispiele 3-6

Analog Beispiel 1, wurden Sinterkörper hergestellt mit dem Unterschied, daß die Mengen des zugesetzten Graphitpulvers wie in Tab. 1 angegeben variiert wurden.

Tab. 1 zeigt die Sinterdichten der Werkstoffe in Bezug auf die zugesetzte Menge an Graphit.

**Tabelle 1**

| Beispiel Nr. | Graphit (Vol.%) | Graphit >100 µm (Vol.%) | Sinterdichte (%TD) |
|---|---|---|---|
| 1 | 7 | 5 | 99,0 |
| 2 | 7 | 5 | 99,0 |
| 3 | 10 | 7 | 99,0 |
| 4 | 15 | 9 | 98,5 |
| 5 | 20 | 12 | 97,0 |
| 6 | 30 | 18 | 95,0 |

### Beispiel 7

Die Graphitphase der in den Beispielen 1 bis 6 erhaltenen Sinterkörper wurde mittels Bildverarbeitung einer quantitativen keramographischen Auswertung unterzogen.

Der Sinterkörper gemäß Beispiel 4 enthielt einen Graphitanteil von 15 Vol-%. 12 Vol.% (bezogen auf den Sinterkörper) des Graphits hatten eine Teilchengröße >50 µm. 9 Vol.% (bezogen auf den Sinterkörper) des Graphits hatten eine Teilchengröße > 100 µm. Der Anteil an Teilchen > 200 µm betrug 4 Vol.% (bezogen auf den Sinterkörper).

### Beispiel 8

Gleitringe aus Beispiel 4 wurden auf dem Hochdruckprüfstand in einer hart/hart-Paarung (Gleitring und Gegenring aus Material gemäß Beispiel 4) geprüft. Als Medium wurde demineralisiertes Wasser eingesetzt, die Temperatur betrug 60°C, die Gleitgeschwindigkeit lag konstant bei 10 m/s.

Die Paarungen wurden für 48 bis 336 h bei Druckdifferenzen von 10 bis 125 bar getestet. Ein meßbarer Verschleiß trat nicht auf. Auch nach 336 h waren die Gleitflächen bei 100 bar Druckdifferenz noch in sehr gutem Zustand. Die Versuchsergebnisse sind in Tab. 2 zusammengefaßt.

**Tabelle 2**

| Druckdifferenz (bar) | pv-Wert (bar m/s) | Versuchsdauer (h) | Verschleiß Gleitring (µm/h) | Verschleiß Gegenring (µm/h) |
|---|---|---|---|---|
| 10 | 100 | 48 | 0,0 | 0,0 |
| 25 | 250 | 48 | 0,0 | 0,0 |
| 50 | 500 | 48 | 0,0 | 0,0 |
| 75 | 750 | 48 | 0,0 | 0,0 |
| 100 | 1000 | 336 | 0,0 | 0,0 |
| 125 | 1250 | 48 | 0,0 | 0,0 |

### Vergleichsbeispiel 1

Zum Vergleich wurden Gleitringe gemäß der DE-C-3329225 Beispiel 6, Tab. 8 mit 1 und 5 Vol.-% Graphitzusatz gefertigt.

Diese Gleitringe wurden, wie in Beispiel 8 beschrieben, geprüft. Die Ergebnisse der Versuche sind in Tab. 3 zusammengefaßt.

**Tab. 3**

| DE-C-3329225 Bsp | Menge Graphit (Vol-%) | Druckdifferenz (bar) | pv-Wert (bar m/s) |
|---|---|---|---|
| Nr. 42 | 1 | 50 | 500 1) |
| Nr. 43 | 5 | 50 | 500 2) |

| | | | |
|---|---|---|---|
| 1) Versuch konnte nicht zu Ende gefahren werden aufgrund starker Kantenabplatzer, stark zerrütteter Gleitfläche, auftretender Leckage, Verschleiß daher nicht mehr in µm/h angebbar. | | | |
| 2) Versuch konnte nicht zu Ende gefahren werden aufgrund von Kantenabplatzern und auftretender Leckage, Verschleiß nicht in µm/h angebbar. | | | |

### Vergleichsbeispiele 2-4

Beispiele 1, 3 und 4 wurden wiederholt, mit dem Unterschied, daß Graphit einer Teilchengröße von 20-100 µm zugesetzt wurde. Seine Kornverteilung entsprach der aus Beispielen 1, 3 und 4 jedoch ohne Anteile mit einer Teilchengröße oberhalb 100 µm.

Tab. 4 nennt die eingesetzten Mengen Graphit und zeigt die erhaltenen Sinterdichten.

**Tabelle 4**

| Vergl.bsp. Nr. | Menge Graphit (Vol.%) | Sinterdichte (%TD) |
|---|---|---|
| 2 | 7 | 99,2 |
| 3 | 10 | 99 |
| 4 | 15 | 98,7 |

Gleitringe aus Vergleichsbeispiel 2 wurden, wie in Beispiel 8 beschrieben, auf dem Hochdruckprüfstand geprüft. Die Versuchsergebnisse finden sich in Tab. 5.

**Tabelle 5**

| Druckdifferenz (bar) | pv-Wert (bar m/s) | Versuchsdauer (h) | Verschleiß Gleitringe (µm/h) | Verschleiß Gegenring (µm/h) |
|---|---|---|---|---|
| 10 | 100 | 48 | 0 | 0 |
| 25 | 250 | 48 | 0,02 | 0,02 |
| 50 | 500 | 48 | 0,08 | 0,08 |
| 75 | 750 | 48 | -¹⁾ | -¹⁾ |

| | | | | |
|---|---|---|---|---|
| ¹⁾ Versuch konnte nicht zu Ende geführt werden aufgrund von Kantenabplatzern und Leckage. | | | | |

Das Vergleichsbeispiel zeigt, daß der Graphitanteil > 100 µm erfindungswesentlich ist, da der Werkstoff aus Vergleichsbeispiel 2 bei einer Druckdifferenz von 50 bar bereits erhöhten Verschleiß aufweist und bei 75 bar nicht mehr eingesetzt werden kann.

## Patentansprüche

1. Praktisch porenfreier Formkörper mit einer Dichte von mindestens 95 % TD enthaltend 70 bis 93 Vol.% SiC und 7 bis 30 Vol.% Festschmierstoff, wobei der Festschmierstoff mindestens eine Substanz ausgewählt aus der Gruppe Graphit, hexagonales Bornitrid, und Ruß ist und eine Korngröße von 20 bis 500 µm hat, dadurch gekennzeichnet, daß der Anteil an Festschmierstoff einer Korngröße größer 100 µm mindestens 5 Vol.% bezogen auf das Gesamtvolumen des Formkörpers beträgt.

2. Formkörper gemäß Anspruch 1, dadurch gekennzeichnet, daß er 80 bis 90 Vol.% SiC und 10 bis 20 Vol.% Festschmierstoff enthält.

3. Formkörper gemäß Anspruch 1 oder 2, dadurch gekennzeichnet, daß er mindestens 5 Vol.% bezogen auf das Gesamtvolumen des Formkörpers Festschmierstoff einer Korngröße von 100 bis 500 µm enthält.

4. Formkörper gemäß einem der Ansprüche 1 bis 3, dadurch gekennzeichnet, daß er als Festschmierstoff ausschließlich Graphit enthält.

5. Verfahren zur Herstellung von Formkörpern gemäß einem oder mehreren der Ansprüche 1 bis 3, bei dem geeignete SiC-Pulver mit mindestens einem Festschmierstoff ausgewählt aus der Gruppe Graphit, hexagonales Bornitrid, und Ruß sowie ggf. mit für SiC Sinterkörper üblichen an sich bekannten Sinterhilfsmitteln und Preßhilfsmitteln in an sich bekannter Weise gemischt und geformt werden, und anschließend durch Heißpressen oder Heißisostatpressen oder Drucklossintern verdichtet werden, dadurch gekennzeichnet, daß der Festschmierstoff eine mittlere Korngröße von 20 bis 500 µm und einen Anteil an Festschmierstoffteilchen einer Korngröße größer 100 µm von mindestens 5 Vol.% bezogen auf das Gesamtvolumen des Sinterkörpers hat.

6. Verwendung von Formkörpern gemäß einem oder mehreren der Ansprüche 1 bis 3 als Gleitringe unter Einsatzbedingungen mit hohen Druckdifferenzen oder pv-Werten größer als 500 bar m/s.
